# EUROPÄISCHE PATENTSCHRIFT

(11) **EP 2 260 923 B1**
(45) Veröffentlichungstag und Bekanntmachung des Hinweises auf die Patenterteilung: **26.03.2014**
(21) Anmeldenummer: 09007516.9
(22) Anmeldetag: 08.06.2009
(51) Int. Cl.: B01D 53/83, B01D 53/12

(54) **Verfahren zur Reinigung von Müllverbrennungsabgasen**
Method for cleaning rubbish combustion exhaust gases
Procédé destiné au nettoyage de gaz d'échappement de combustion de déchets

(43) Veröffentlichungstag der Anmeldung: 15.12.2010
(73) Patentinhaber: AE&E Inova AG, 8005 Zürich (CH)
(72) Erfinder: Prikopsky, Karol, 8037 Zürich (CH); Haller, Klaus-Dieter, 8906 Bonstetten (CH)
(74) Vertreter: Schaad, Balass, Menzl & Partner AG

(56) Entgegenhaltungen:
- EP-A- 1 875 953
- EP-A- 1 964 602
- WO-A-2004/026443
- US-A1- 2005 031 515

## Beschreibung

Die vorliegende Erfindung betrifft ein Verfahren zur Reinigung von Müllverbrennungsabgasen in einer Abgasreinigungsanlage mittels Sorption in einer zirkulierenden Wirbelschicht gemäss dem Oberbegriff des Anspruchs 1 und eine Abgasreinigungsanlage zur Durchführung dieses Verfahrens gemäss dem Oberbegriff des Anspruchs 12.

Verfahren zur Reinigung von Müllverbrennungsabgasen unter Abscheidung von darin enthaltenen Schadstoffen, wie z.B. HCl, HF, SO₂, Stickoxiden und Dioxin, sind dem Fachmann wohlbekannt.

Ein mögliches Verfahren stellt dabei die Abscheidung der Schadstoffe mittels Sorption in einer zirkulierenden Wirbelschicht dar. In der Regel wird dazu ein Sorptionsmittel in einen Wirbelschichtreaktor eingebracht, wo es in Form einer zirkulierenden Wirbelschicht (auch als "zirkulierendes Wirbelbett" bezeichnet) vorliegt. Die zirkulierende Wirbelschicht kommt dadurch zustande, dass das zugeführte Sorptionsmittel zusammen mit den aus der Müllverbrennung eingeführten Feststoffpartikeln durch die aufwärtsgerichtete Strömung der Abgase in einen Fliesszustand versetzt werden. In der Wirbelschicht sorbieren die im Abgas enthaltenen Schadstoffe am Sorptionsmittel und werden derart aus dem Abgas entfernt.

Dem Wirbelschichtreaktor ist im Allgemeinen ein Feststoffabscheider nachgeschaltet, in dem die im Abgas mitgeführten Feststoffpartikel und somit auch das mit Schadstoff beladene' Sorptionsmittel mindestens teilweise abgeschieden werden. Die abgeschiedenen Feststoffpartikel werden entweder ausgetragen oder über eine entsprechende Feststoffpartikelleitung wieder in den Wirbelschichtreaktor eingeführt. Ein entsprechendes Verfahren wird etwa in der EP-A-1 537 905 beschrieben.

Um die Reaktivität des Sorptionsmittels gegenüber den Schadstoffen zu erhöhen, wird dieses oft mit Wasser behandelt. So wird etwa Branntkalk (CaO), welcher ein übliches Sorptionsmittel darstellt, mit Wasser zu Kalkhydrat (Ca(OH)₂) umgesetzt, welches im Vergleich zu Branntkalk eine erhöhte Reaktivität gegenüber Schadstoffen wie SO₂ und HCl aufweist.

Ein entsprechendes Verfahren wird beispielsweise in dem dem Fachmann bekannten NID-System der Fa. Alstom eingesetzt, in welchem Branntkalk in einem sogenannten Hydrator mit Wasser benetzt und mittels einer über einen Motor betriebenen Förder- und Mischvorrichtung in Richtung zum Wirbelschichtreaktor gefördert wird, wodurch gleichzeitig eine genügende Durchmischung mit dem Wasser gewährleistet werden soll.

Ein alternatives Verfahren wird von der Fa. LAB GmbH eingesetzt, wobei eine Suspension aus Kalk in Wasser (Kalkmilch) in einen Sprühabsorber eingeführt und in diesem mit den Abgasen in Kontakt gebracht wird.

Allerdings hat sich gezeigt, dass in den bekannten Verfahren die Durchmischung des Wassers mit dem Sorptionsmittel oft ungenügend ist. Eine inhomogene Verteilung des Wassers im Sorptionsmittel resultiert aber in der Regel einerseits in einem relativ hohen Verbrauch an Sorptionsmittel. Andererseits steigt dadurch die Gefahr von Anbackungen und Verklumpungen beträchtlich, welche im Extremfall die Abgasreinigungsanlage komplett verstopfen können und die Betriebssicherheit somit massiv beeinträchtigen.

Aufgabe der vorliegenden Erfindung ist es somit, ein Verfahren zur Verfügung zu stellen, welches einerseits geeignet ist, den Verbrauch an frischem Sorptionsmittel zu optimieren, und welches andererseits eine möglichst hohe Betriebssicherheit gewährleistet.

Die Aufgabe wird gelöst durch das Verfahren gemäss Anspruch 1. Bevorzugte Ausführungsformen dieses Verfahrens werden in den abhängigen Ansprüchen angegeben.

Die vorliegende Erfindung betrifft somit ein Verfahren zur Reinigung von Müllverbrennungsabgasen in einer Abgasreinigungsanlage mittels Sorption in einer zirkulierenden Wirbelschicht, wobei mindestens zu einem Teil der in der zirkulierenden Wirbelschicht enthaltenen Feststoffpartikel Wasser zugeführt wird.

Erfindungsgemäss wird nun mindestens ein Teil des Wassers in einem Benetzungsbereich der Abgasreinigungsanlage zu den Feststoffpartikeln zugeführt, in welchem diese in einer stationären Wirbelschicht vorliegen. Dadurch wird auch bei relativ sparsamen Wasserverbrauch eine optimale Durchmischung des Wassers mit dem Sorptionsmittel gewährleistet, was einerseits einen optimierten Sorptionsmittelverbrauch ermöglicht und andererseits die Gefahr von Anbackungen und Verklumpungen stark vermindert und somit eine hohe Betriebssicherheit gewährleistet.

Es hat sich gezeigt, dass durch die Behandlung mit Wasser gemäss der vorliegenden Erfindung nicht nur die Sorptionskapazität von frischem Sorptionsmittel, sondern auch von bereits mit Schadstoffen beladenen Feststoffpartikeln erhöht werden kann. Insbesondere wurde festgestellt, dass mit Chlorid beladenes Sorptionsmittel durch Behandlung mit Wasser eine Änderung in der Oberflächenstruktur erfährt, welche mit einer Erhöhung der Reaktivität gegenüber den Schadstoffen einhergeht.

Gemäss der vorliegenden Erfindung wird somit nicht nur die Reaktivität von frischem Sorptionsmittel erhöht, es kann vielmehr auch der Restsorptionskapazität von bereits mit Schadstoffen beladenen Feststoffpartikeln Rechnung getragen werden, was den Bedarf an frischem Sorptionsmittel weiter vermindert.

Der Begriff Feststoffpartikel schliesst dabei nicht nur das Sorptionsmittel mit ein, sondern auch alle anderen in der zirkulierenden Wirbelschicht enthaltenen Feststoffpartikel, also z.B. auch Brennstoffpartikel und Flugasche, die aus dem Feuerungsteil der Müllverbrennungsanlage mitgeführt werden, sowie Aktivkohle (Herdofenkoks).

Der Begriff der stationären (oder blasenbildenden) Wirbelschicht ist dem Fachmann bekannt. Im Gegensatz zu einer zirkulierenden Wirbelschicht handelt es sich dabei um eine Wirbelschicht, bei denen die fluidisierte Schüttung eine definierte Grenze besitzt.

Im Allgemeinen werden im erfindungsgemässen Verfahren die Müllverbrennungsabgase in einen Wirbelschichtreaktor geleitet und dort mit Sorptionsmittel behandelt, die im Wirbelschichtreaktor behandelten Müllverbrennungsabgase in mindestens einen Feststoffabscheider geleitet und dort mindestens teilweise von Feststoffpartikeln getrennt. Die abgetrennten Feststoffpartikel werden dann mindestens teilweise über eine dem Feststoffabscheider zugeordneten Feststoffpartikelleitung wieder in den Wirbelschichtreaktor eingeführt.

Im Allgemeinen ist der Feststoffpartikelleitung ein Dosierorgan zur dosierten Leitung von Feststoffpartikeln zugeordnet, wobei stromabwärts vom Dosierorgan eine im Wesentlichen stationäre Wirbelschicht der Feststoffpartikel erzeugt wird. Erfindungsgemäss ist somit denkbar, Wasser in diesen Bereich der Feststoffpartikelleitung einzuführen, welcher somit den Benetzungsbereich bildet.

Gemäss einer bevorzugten Ausführungsform wird der Benetzungsbereich von einem Benetzungsreaktor umfasst, welcher besonders bevorzugt der Feststoffpartikelleitung zugeordnet ist. Der Benetzungsreaktor ist dabei mit einer Wasserzuführleitung ausgestattet und weist in der Regel Mittel zur Erzeugung einer stationären Wirbelschicht auf. Als Mittel zur Erzeugung der stationären Wirbelschicht kommt etwa ein Gebläse mit einer/m oberhalb davon angeordneten Fritte oder Düsenboden in Frage. Um eine möglichst homogene Verteilung des Wassers zu erhalten, ist die Wasserzuführleitung üblicherweise mit einem Sprühkopf ausgestattet.

Die Verweilzeit der Feststoffpartikel und damit deren Benetzungsgrad kann etwa mittels einer Überlaufeinrichtung eingestellt werden. Dabei sind aber auch alle anderen dem Fachmann zu diesem Zweck bekannten Mittel denkbar.

Erfindungsgemäss wird mindestens ein Teil der Feststoffpartikel über mindestens eine Austragungsleitung aus dem Kreislauf der zirkulierenden Wirbelschicht ausgetragen, mindestens ein Teil der ausgetragenen Feststoffpartikel mittels einer Fraktionierungsvorrichtung in eine erste und eine zweite Fraktion getrennt und
lediglich die erste Fraktion der ausgetragenen Feststoffpartikel über eine Rückführungsleitung in den Kreislauf der zirkulierenden Wirbelschicht zurückgeführt.

Es versteht sich von selbst, dass in dieser Ausführungsform sowohl die erste als auch die zweite Fraktion aus einer beliebigen Zahl einzelner Unterfraktionen gebildet sein kann.

Besagte Ausführungsform erlaubt es, die Feststoffpartikel z.B. nach ihrer Restsorptionskapazität zu trennen, wobei die selektive Rückführung nur derjenigen Fraktion mit einer hohen Restsorptionskapazität zusätzlich zu einer beträchtlichen Einsparung an einzusetzendem Sorptionsmittel führt.

Besonders bevorzugt unterscheidet sich in dieser Ausführungsform die durchschnittliche Korngrösse der in der ersten Fraktion enthaltenen Feststoffpartikel von der durchschnittlichen Korngrösse der in der zweiten Fraktion enthaltenen Feststoffpartikel. Die durchschnittliche Korngrösse der Feststoffpartikel der ersten bzw. der zweiten Fraktion kann z.B. je nach verwendetem Sorptionsmittel und vorgegebener Zielsetzung des Reinigungsverfahrens stark variieren.

Gemäss einer weiteren bevorzugten Ausführungsform erfolgt die Trennung der Feststoffpartikel in die beiden Fraktionen mittels eines Sichters, insbesondere mittels eines Windsichters. Dabei kann es je nach Betriebsführung bevorzugt sein, dass der Sichtluftstrom vorgewärmt wird.

Alternativ dazu ist aber - je nach Anlage und Bedingungen - auch denkbar, einen kalten Sichtluft-strom zu verwenden, insbesondere dann, wenn beim gewählten Sorptionsmittel die Sorption in kaltem Zustand begünstigt wird.

Für die entsprechenden Zwecke geeignete Sichter sind dem Fachmann bekannt. Insbesondere bevorzugt sind Windsichter, wie etwa Schwerkraft-, Streu- oder Zentrifugalsichter. Als Schwerkraftsichter sind etwa Säulensichter denkbar. Bei diesen erfolgt die Aufgabe der Feststoffpartikel über Streuwalzen. Im Sichtraum folgen dann die (feinen) Feststoffpartikel der ersten Fraktion der Sichtluftströmung nach oben, während die (groben) Feststoffpartikel der zweiten Fraktion der Schwerkraft nach unten folgen. Alternativ zu Säulensichter sind etwa Vibrosichter denkbar, bei denen ein quer zum Strom der Sichtluft angeordnetes Vibrationssieb die Feststoffpartikel durch den Klassierraum fördert. Im Übrigen sind Streutrichter, wie etwa Kreiseltrichter, besonders bevorzugt. Bei letzterem wird der den Sichtluftstrom erzeugende Ventilator mit einem Streuteller kombiniert, der die Feststoffpartikel gegen das Innere des Sichtergehäuses schleudert.

Als Beispiele für Windsichter, die für die vorliegenden Zwecke besonders gut geeignet sind, werden die Stratoplex® Windsichter ASP (Hosokawa Alpine AG), insbesondere Typ 315 oder Typ 400 erwähnt.

Alternativ oder zusätzlich zu der genannten Trennung nach der Korngrösse der Feststoffpartikel kann diese etwa auch aufgrund der Konzentration einzelner Komponenten in der zirkulierenden Wirbelschicht erfolgen. So ist etwa denkbar, die Trennung der Feststoffpartikel in Abhängigkeit der Konzentration einer ihrer Komponenten vorzunehmen. Eine entsprechende Bestimmung kann etwa mittels eines Fourier-Transform-Nahinfrarot-Spektrometers in situ durchgeführt werden.

Bevorzugt zweigt in der genannten Ausführungsform die mindestens eine Austragungsleitung vom Feststoffabscheider und/oder von der Feststoffpartikelleitung ab. Dadurch wird einerseits gewährleistet, dass die ausgetragenen Feststoffpartikel einschliesslich des Sorptionsmittels bereits in intensiven Kontakt mit den Abgasen gebracht wurden, dass also in der zurückgeführten Fraktion auch bereits relativ stark mit Schadstoffen beladene Feststoffpartikel enthalten sind und durch die Behandlung mit Wasser aktiviert werden. Andererseits ist ein aufwändiger Umbau bereits bestehender Anlagen oft nicht erforderlich, um zu dieser bevorzugten Ausführungsform zu gelangen. Aus der Überlegung heraus, dass die mit Wasser aktivierten Feststoffpartikel in möglichst intensiven Kontakt mit den Abgasen treten sollen, ist es überdies besonders bevorzugt, dass die aktivierten Feststoffpartikel in den abgaseinlassseitigen unteren Bereich des Wirbelschichtreaktors eingeführt werden.

In der Regel wird für das Verfahren der vorliegenden Erfindung Branntkalk bzw. - insbesondere nach der Behandlung mit Wasser - Kalkhydrat (Ca(OH)₂) als Sorptionsmittel verwendet. Dieses weist in der Regel einen Reinheitsgrad von mindestens 92% und eine spezifische Oberfläche von mindestens 15 m²/g auf. Allerdings ist eine Vielzahl weiterer Sorptionsmittel wie Natriumbicarbonat (NaHCO₃), Spongiacal® (Rheinkalk) oder Sorbalit® (Märker Umwelttechnik GmbH) denkbar. Erfindungsgemäss kann ein einzelnes Sorptionsmittel oder eine Mischung verschiedener Sorptionsmittel verwendet werden.

Wird Kalkhydrat als Sorptionsmittel verwendet, reagieren die Schadstoffe SO₂, HCl und HF gemäss den folgenden Reaktionsgleichungen zu den entsprechenden Salzen:

Ca(OH)₂ + H₂O + SO₂ -> CaSO₃ (Calciumsulfit) + 2 H₂O

Ca(OH)₂ + 2 HCl -> CaCl₂ (Calciumchlorid) + 2 H₂O

Ca(OH)₂ + 2 HF -> CaF₂ (Calciumfluorid) + 2 H₂O

Im Allgemeinen wird die Menge an auszutragenden Feststoffpartikeln über den Füllgrad im Feststoffabscheider geregelt. In der Regel findet dabei eine permanente Austragung von Feststoffpartikeln statt, wobei die Austragungsrate beim Überschreiten eines vorgegebenen oberen Schwellenwertes des Füllgrads beschleunigt bzw. beim Unterschreiten eines vorgegebenen unteren Schwellenwertes verlangsamt wird. Mithin kann die Menge an im Kreislauf der zirkulierenden Wirbelschicht enthaltenem Feststoff innerhalb eines bevorzugten Bereichs gehalten werden. In der Regel erfolgt die Austragung der Feststoffpartikel mittels einer Zellenradschleuse.

Weiter ist bevorzugt, dass die über das Dosierorgan in der Feststoffpartikelleitung zu leitende Feststoffpartikelmenge über die Duckdifferenz über der Wirbelschicht geregelt wird. Die Menge an frischem in den Wirbelschichtreaktor einzuführendem Sorptionsmittel wird in der Regel über die Reingasmessung geregelt. Je nach der Menge an ausgetragenen Feststoffpartikeln bzw. der in den Kreislauf der zirkulierenden Wirbelschicht zurückgeführten Fraktion und der Menge an frischem Sorptionsmittel wird die über das Dosierorgan zu leitende Feststoffpartikelmenge herabgesetzt oder erhöht.

Zusätzlich zur Zuführung von Wasser im Benetzungsbereich gemäss der vorliegenden Erfindung kann Wasser auch an weiteren Orten zugeführt werden, etwa in den Wirbelschichtreaktor.

Nebst dem oben beschriebenen Verfahren betrifft die vorliegende Erfindung überdies eine Abgasreinigungsanlage zur Durchführung des Verfahrens gemäss Anspruch 11.

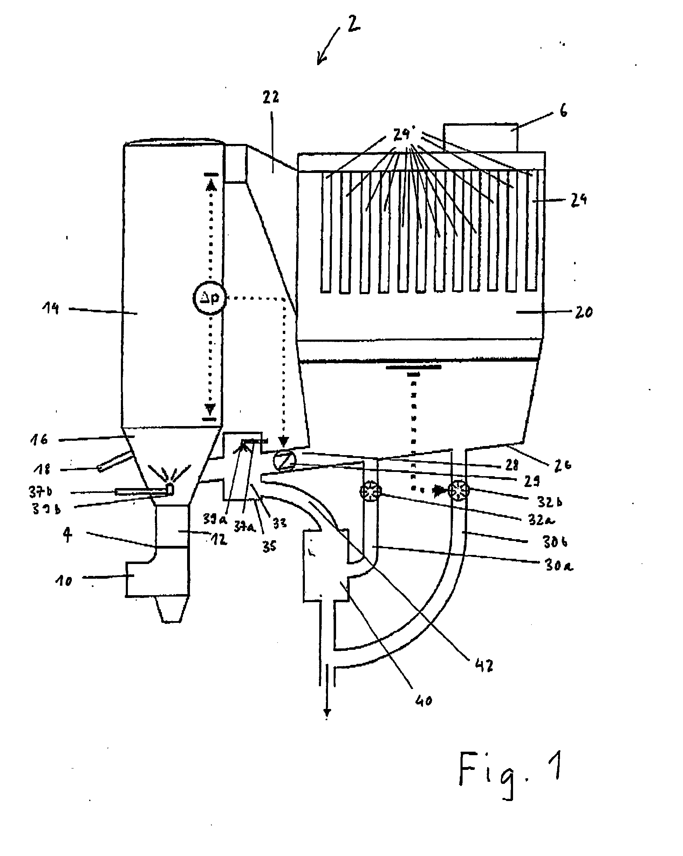

Die vorliegende Erfindung wird anhand der Figur 1 weiter erläutert.

Figur 1 zeigt rein schematisch eine Abgasreinigungsanlage umfassend einen Wirbelschichtreaktor und einen in Richtung des Abgasstroms abwärts davon angeordneten Feststoffabscheider zur Durchführung des erfindungsgemässen Verfahrens.

Die in Fig. 1 gezeigte Abgasreinigungsanlage 2 umfasst einen Rohgaseinlass 4, durch den das bei der Müllverbrennung gebildete Abgas einströmt, und einen Reingasauslass 6, durch den das gereinigte Abgas aus der Abgasreinigungsanlage 2 abgegeben wird. Der Rohgaseinlass 4 umfasst einen Einlassstutzen 10 und einen in Strömungsrichtung der Abgase daran anschliessenden Einlasskanal 12, der in den Wirbelschichtreaktor 14 mündet. Der Wirbelschichtreaktor 14 weist im Wesentlichen die Form eines Hohlzylinders auf, welcher sich abgaseinlassseitig zum Einlasskanal 12 hin kegelförmig verjüngt. In den sich kegelförmig verjüngenden Bereich 16 mündet eine Sorptionsmittelzuleitung 18 zur Eindüsung des frischen Sorptionsmittels. Das Sorptionsmittel wird von dem in den Wirbelschichtreaktor 14 einströmenden Abgas mitgenommen und bildet mit den im Abgasstrom von der Müllverbrennung mitgeführten Brennstoffpartikeln und der Flugasche eine zirkulierende Wirbelschicht (nicht gezeigt).

Im oberen Bereich mündet der Wirbelschichtreaktor 14 in einen zum Feststoffabscheider 20 führenden Verbindungskanal 22. Der Feststoffabscheider 20 weist im oberen Bereich ein Filtersystem 24 zur Abscheidung der im Abgasstrom mitgeführten Feststoffpartikel auf. Das Filtersystem 24 besteht aus einer Vielzahl an Gewebefilterschläuchen 24'. Nach Passieren des Filtersystems 24 wird das resultierende Reingas durch den Reingasauslass 6 emittiert.

Die abgeschiedenen Feststoffpartikel sedimentieren am schräg nach unten verlaufenden Boden 26 des Feststoffabscheiders 20 und fliessen entlang des Bodens 26 in eine in Form einer Rezirkulationsrinne vorliegende Feststoffpartikelleitung 28. Die Feststoffpartikelleitung 28 weist ein Dosierorgan 29 auf, über welches der Volumenstrom an über die Feststoffpartikelleitung 28 zu leitendem Feststoff eingestellt werden kann. Stromabwärts des Dosierorgans 29 ist der Feststoffpartikelleitung 28 ein Benetzungsreaktor 35 zugeordnet, welcher den Benetzungsbereich 33 definiert. Dieser weist eine Wasserzuführleitung 37a mit einem Düsenkopf 39a auf, über den das Wasser in den Benetzungsreaktor 35 eingeführt und versprüht wird. Die mit Wasser behandelten Feststoffpartikel werden in der Folge aus dem Benetzungsreaktor 35 über die Feststoffpartikelleitung 28 in den abgaseinlassseitigen Bereich des Wirbelschichtreaktors 14 eingeführt.

In der gezeigten Ausführungsform zweigen vom Feststoffabscheider 20 zwei Austragungsleitungen 30a, 30b ab, welche über eine in Form einer Zellenradschleuse vorliegende Fördereinrichtung 32a, 32b verfügen. Denkbar ist natürlich jede andere Zahl an Ausführungsleitungen.

Eine erste der beiden Austragungsleitungen 30a mündet dabei stromabwärts der Fördereinrichtung 32a in eine in Form eines Sichters vorliegende Fraktionierungsvorrichtung 40. In diesem wird der über die Austragungsleitung 30 ausgetragene Teil in eine erste Fraktion und eine zweite Fraktion getrennt, wobei die erste Fraktion über eine Rückführungsleitung 42 in den Benetzungsreaktor 35 und schliesslich somit in den Kreislauf der zirkulierenden Wirbelschicht zurückgeführt wird und die zweite Fraktion mit den über die zweite Austragungsleitung 30b ausgetragenen Feststoffpartikeln vereint und verworfen wird, was in Fig. 1 mit einem Pfeil angedeutet ist.

Wie mit gestrichelten Linien angedeutet, weist die in Fig. 1 gezeigte Abgasreinigungsanlage Mittel auf, die es erlauben, die Menge an über die Austragungsleitungen 30a, 30b auszutragenden Feststoffpartikeln über den Füllgrad im Feststoffabscheider zu regeln.

Im Weiteren sind Mittel vorgesehen, um die über das Dosierorgan 29 in der Feststoffpartikelleitung 28 zu leitenden Feststoffpartikelmenge zu regeln. Besagte Menge wird in der gezeigten Ausführungsform über die über die Wirbelschicht vorliegende Druckdifferenz geregelt.

Um zu gewährleisten, dass die Temperatur in der Abgasreinigungsanlage 2 einen vorgegebenen Wert nicht überschreitet und zur weiteren Reaktivierung von Feststoffpartikeln, kann zusätzliches Wasser auch in den Wirbelschichtreaktor 14 eingedüst werden. Dazu weist der Wirbelschichtreaktor 14 unterhalb der Sorptionsmittelzuleitung 18 eine weitere Wasserzuleitung 37b mit einem Düsenkopf 39b auf.

## Patentansprüche

1. Verfahren zur Reinigung von Müllverbrennungsabgasen in einer Abgasreinigungsanlage (2) mittels Sorption in einer zirkulierenden Wirbelschicht, wobei mindestens zu einem Teil der in der zirkulierenden Wirbelschicht enthaltenen Feststoffpartikel Wasser zugeführt wird, wobei mindestens ein Teil des Wassers in einem Benetzungsbereich (33) der Abgasreinigungsanlage (2) zu den Feststoffpartikeln zugeführt wird, in welchem diese in einer stationären Wirbelschicht vorliegen, **und mindestens ein Teil der Feststoffpartikel über mindestens eine Austragungaleitung (30a, 30b) aus dem Kreislauf der zirkulierenden Wirbelschicht ausgetragen wird, dadurch gekennzeichnet, dass mindestens ein Teil der ausgetragenen Feststoffpartikel mittels einer Fraktionierungsvorrichtung (40) in eine erste und eine zweite Fraktion getrennt wird und lediglich die erste Fraktion der ausgetragenen Feststoffpartikel über eine Rückführungsleitung (42) in den Kreislauf der zirkulierenden Wirbelschicht zurückgeführt wird.**

2. Verfahren nach Anspruch 1, **dadurch gekennzeichnet, dass** die Müllverbrennungsabgase in einen Wirbelschichtreaktor (14) geleitet und dort mit Sorptionsmittel behandelt werden, die im Wirbelschichtreaktor (14) behandelten Müllverbrennungsabgase in mindestens einen Feststoffabscheider (20) geleitet und dort mindestens teilweise von Feststoffpartikeln getrennt werden und die abgetrennten Feststoffpartikel mindestens teilweise über eine dem Feststoffabscheider (20) zugeordnete Feststoffpartikelleitung (28) wieder in den Wirbelschichtreaktor (14) eingeführt werden.

3. Verfahren nach Anspruch 1 oder 2, **dadurch gekennzeichnet, dass** der Benetzungsbereich (33) von einem Benetzungsreaktor (35) umfasst wird.

4. Verfahren nach Anspruch 2 oder 3, **dadurch gekennzeichnet, dass** der Benetzungsbereich (33) der Feststoffpartikelleitung (28) zugeordnet ist.

5. Verfahren nach Anspruch 4, **dadurch gekennzeichnet, dass** die Rückführung der ersten Fraktion in den Benetzungsbereich (33) der Abgasreinigungsanlage (2) erfolgt .

6. Verfahren nach Anspruch 4 oder 5, **dadurch gekennzeichnet, dass** sich die durchschnittliche Korngrösse der in der ersten Fraktion enthaltenen Feststoffpartikel und die durchschnittliche Korngrösse der in der zweiten Fraktion enthaltenen Feststoffpartikel voneinander unterscheiden.

7. Verfahren nach einem der Ansprüche 4 bis 6, **dadurch gekennzeichnet, dass** die Trennung der Feststoffpartikel in die beiden Fraktionen mittels eines Sichters erfolgt.

8. Verfahren nach Anspruch 7, **dadurch gekennzeichnet, dass** der Sichter ein windeichter ist.

9. Verfahren nach Anspruch 8, **dadurch gekennzeichnet, dass** der Sichtluftstrom des Windsichters vorgewärmt wird.

10. Verfahren nach einem der Ansprüche 4 bis 9, **dadurch gekennzeichnet, dass** die Trennung der Feststoffpartikel in Abhängigkeit der Konzentration einer ihrer Komponenten vorgenommen wird, wobei die Bestimmung der Konzentration vorzugsweise mittels eines Fourier-Transform-Nahinfrarot-Spektrometers durchgeführt wird.

11. Abgasreinigungsanlage zur Durchführung des Verfahrens gemäss einem der vorhergehenden Ansprüche umfassend
einen Wirbelschichtreaktor (14) zur Behandlung der Müllverbrennungsabgase mit einem Sorptionsmittel,
einen in Strömungsrichtung der Müllverbrennungsabgase nach dem Wirbelschichtreaktor (14) angeordneten Feststoffabscheider (20) zur Abtrennung von Feststoffpartikeln von den müllverbrennungsabgasen,
eine vom Feststoffabscheider (20) in den Wirbelschichtreaktor (14) führende Feststoffpartikelleitung (28) zur Wiedereinführung mindestens eines Teils der im Feststoffabscheider (20) abgetrennten Feststoffpartikel in den Wirbelschichtreaktor (14),
eine Wasserzuführleitung (37), wobei die Wasserzuführleitung (37) einem Benetzungsbereich (33) der Abgasreinigungsanlage zugeordnet ist, in welchem die Feststoffpartikel in einer stationären Wirbelschicht vorliegen,
**wobei die Abgasreinigungsanlage mindestens eine Austragungsleitung (30) zur Austragung mindestens eines Teils der Feststoffpartikel aus dem Kreislauf der zirkulierenden Wirbelschicht umfasat,**
**dadurch gekennzeichnet, dass die Abgasreinigungsanlage überdies eine Fraktionierungsvorrichtung (40) zur Trennung mindestens eines Teils der ausgetragenen reststoffpartikel in eine erste Fraktion und eine zweite Fraktion und**
**eine Rückführungsleitung (42) zur Rückführung der ersten Fraktion in den Kreislauf der zirkulierenden Wirbelschicht umfasst.**

12. Abgasreinigungsanlage nach Anspruch 11, **dadurch gekennzeichnet, dass** sie einen den Benetzungsbereich (33) umfassenden Benetzungsreaktor (35) umfasst.

13. Abgasreinigungsanlage nach einem der Ansprüche 11 bis 12, **dadurch gekennzeichnet, dass** die Rückführungsleitung (42) in den Benetzungsbereich (33) mündet.

## Claims

1. Method for cleaning refuse incineration exhaust gases in an exhaust-gas cleaning plant (2) by means of sorption in a circulating fluidized bed, wherein water is supplied at least to some of the solid particles present in the circulating fluidized bed, wherein at least some of the water is supplied to the solid particles in a wetting region (33) of the exhaust-gas cleaning plant (2), in which said solid particles are present in a stationary fluidized bed, and at least some of the solid particles are discharged from the circuit of the circulating fluidized bed via at least one discharge line (30a, 30b), **characterized in that** at least some of the discharged solid particles are separated into a first and a second fraction by means of a fractionation apparatus (40), and merely the first fraction of the discharged solid particles is returned into the circuit of the circulating fluidized bed via a return line (42).

2. Method according to Claim 1, **characterized in that** the refuse incineration exhaust gases are conducted into a fluidized bed reactor (14), where they are treated with sorption agent, the refuse incineration exhaust gases treated in the fluidized bed reactor (14) are conducted into at least one solids separator (20), where they are separated at least partially from solid particles, and the separated solid particles are at least partially introduced back into the fluidized bed reactor (14) via a solid particle line (28) assigned to the solids separator (20).

3. Method according to Claim 1 or 2, **characterized in that** the wetting region (33) is encompassed by a wetting reactor (35).

4. Method according to Claim 2 or 3, **characterized in that** the wetting region (33) is assigned to the solid particle line (28).

5. Method according to Claim 4, **characterized in that** the first fraction is returned into the wetting region (33) of the exhaust-gas cleaning plant (2).

6. Method according to Claim 4 or 5, **characterized in that** the average grain size of the solid particles present in the first fraction and the average grain size of the solid particles present in the second fraction differ from one another.

7. Method according to one of Claims 4 to 6, **characterized in that** the solid particles are separated into the two fractions by means of a classifier.

8. Method according to Claim 7, **characterized in that** the classifier is an air classifier.

9. Method according to Claim 8, **characterized in that** the classifying airflow of the air classifier is preheated.

10. Method according to one of Claims 4 to 9, **characterized in that** the solid particles are separated depending on the concentration of one of the components thereof, the concentration preferably being determined by means of a Fourier transform near infrared spectrometer.

11. Exhaust-gas cleaning plant for carrying out the method according to one of the preceding claims, comprising
a fluidized bed reactor (14) for treating the refuse incineration exhaust gases with a sorption agent,
a solids separator (20), arranged downstream of the fluidized bed reactor (14) in the direction of flow of the refuse incineration exhaust gases, for separating solid particles from the refuse incineration exhaust gases,
a solid particle line (28), leading from the solids separator (20) into the fluidized bed reactor (14), for introducing at least some of the solid particles separated in the solids separator (20) back into the fluidized bed reactor (14),
a water supply line (37), the water supply line (37) being assigned to a wetting region (33) of the exhaust-gas cleaning plant, in which the solid particles are present in a stationary fluidized bed,
wherein the exhaust-gas cleaning plant comprises at least one discharge line (30) for discharging at least some of the solid particles from the circuit of the circulating fluidized bed,
**characterized in that** the exhaust-gas cleaning plant moreover comprises a fractionation apparatus (40) for separating at least some of the discharged solid particles into a first fraction and a second fraction, and
a return line (42) for returning the first fraction into the circuit of the circulating fluidized bed.

12. Exhaust-gas cleaning plant according to Claim 11, **characterized in that** it comprises a wetting reactor (35) encompassing the wetting region (33).

13. Exhaust-gas cleaning plant according to either of Claims 11 and 12, **characterized in that** the return line (42) issues into the wetting region (33).

## Revendications

1. Procédé pour l'épuration de gaz d'échappement de la combustion de déchets dans une installation d'épuration de gaz d'échappement (2) par sorption dans une couche fluidisée en circulation, dans lequel on ajoute de l'eau à au moins une partie des particules de matières solides contenues dans la couche fluidisée en circulation, dans lequel on ajoute au moins une partie de l'eau aux particules de matières solides dans une zone d'humidification (33) de l'installation d'épuration de gaz d'échappement (2), dans laquelle celles-ci se trouvent dans une couche fluidisée stationnaire, et on extrait au moins une partie des particules de matières solides hors du circuit de la couche fluidisée en circulation au moyen d'au moins une conduite d'extraction (30a, 30b), **caractérisé en ce que** l'on sépare au moins une partie des particules de matières solides extraites en une première fraction et une deuxième fraction au moyen d'un dispositif de fractionnement (40) et on renvoie uniquement la première fraction des particules de matières solides extraites dans le circuit de la couche fluidisée en circulation au moyen d'une conduite de retour (42).

2. Procédé selon la revendication 1, **caractérisé en ce que** l'on conduit les gaz d'échappement de la combustion de déchets dans un réacteur à couche fluidisée (14) et on les y traite avec un moyen de sorption, on conduit les gaz d'échappement de la combustion de déchets traités dans le réacteur à couche fluidisée (14) dans au moins un séparateur de matières solides (20) et on les y débarrasse au moins en partie des particules de matières solides et on introduit de nouveau dans le réacteur à couche fluidisée (14) les particules de matières solides séparées, au moins en partie par une conduite de particules de matières solides (28) associée au séparateur de matières solides (20).

3. Procédé selon la revendication 1 ou 2, **caractérisé en ce que** la zone d'humidification (33) est entourée par un réacteur d'humidification (35).

4. Procédé selon la revendication 2 ou 3, **caractérisé en ce que** la zone d'humidification (33) est associée à la conduite de particules de matières solides (28).

5. Procédé selon la revendication 4, **caractérisé en ce que** l'on opère le retour de la première fraction dans la zone d'humidification (33) de l'installation d'épuration de gaz d'échappement (2).

6. Procédé selon la revendication 4 ou 5, **caractérisé en ce que** la grosseur de grain moyenne des particules de matières solides contenues dans la première fraction et la grosseur de grain moyenne des particules de matières solides contenues dans la deuxième fraction sont différentes l'une de l'autre.

7. Procédé selon l'une quelconque des revendications 4 à 6, **caractérisée en ce que** l'on opère la séparation des particules de matières solides en ces deux fractions au moyen d'un séparateur pneumatique.

8. Procédé selon la revendication 7, **caractérisé en ce que** le séparateur pneumatique est un séparateur à vent.

9. Procédé selon la revendication 8, **caractérisé en ce que** l'on préchauffe le courant d'air de séparation du séparateur à vent.

10. Procédé selon l'une quelconque des revendications 4 à 9, **caractérisé en ce que** l'on effectue la séparation des particules de matières solides en fonction de la concentration d'un de leurs composants, dans lequel on procède à la détermination de la concentration de préférence au moyen d'un spectromètre proche infrarouge à transformée de Fourier.

11. Installation d'épuration de gaz d'échappement pour la mise en oeuvre du procède selon l'une quelconque des revendications précédentes, comprenant:
- un réacteur à couche fluidisée (14) pour le traitement des gaz d'échappement de la combustion de déchets avec un moyen de sorption,
- un séparateur de matières solides (20) disposé après le réacteur à couche fluidisée (14) dans la direction d'écoulement des gaz d'échappement de la combustion de déchets pour la séparation de particules de matières solides hors des gaz d'échappement de la combustion de déchets,
- une conduite de particules de matières solides (28) menant du séparateur de matières solides (20) dans le réacteur à couche fluidisée (14) pour la réintroduction d'au moins une partie des particules de matières solides séparées dans le séparateur de matières solides (20) dans le réacteur à couche fluidisée (14),
- une conduite d'arrivée d'eau (37), dans lequel la conduite d'arrivée d'eau (37) est associée à une zone d'humidification (33) de l'installation d'épuration de gaz d'échappement, dans laquelle les particules de matières solides se trouvent dans une couche fluidisée stationnaire,
- dans laquelle l'installation d'épuration de gaz d'échappement comprend au moins une conduite d'extraction (30) pour l'extraction d'au moins une partie des particules de matières solides hors du circuit de la couche fluidisée en circulation,
**caractérisée en ce que** l'installation d'épuration de gaz d'échappement comprend en outre un dispositif de fractionnement (40) pour la séparation d'au moins une partie des particules de matières solides extraites en une première fraction et une deuxième fraction, et
une conduite de retour (42) pour le renvoi de la première fraction dans le circuit de la couche fluidisée en circulation.

12. Installation d'épuration de gaz d'échappement selon la revendication 11, **caractérisée en ce qu'**elle comprend un réacteur d'humidification (35) entourant la zone d'humidification (33).

13. Installation d'épuration de gaz d'échappement selon l'une des revendications 11 à 12, **caractérisée en ce que** la conduite de retour (42) débouche dans la zone d'humidification (33).
